(19) Europäisches Patentamt
European Patent Office
Office européen des brevets

(11) **EP 4 166 931 B1**

(12) **FASCICULE DE BREVET EUROPEEN**

(45) Date de publication et mention de la délivrance du brevet:
**17.04.2024 Bulletin 2024/16**

(21) Numéro de dépôt: **22201173.6**

(22) Date de dépôt: **12.10.2022**

(51) Classification Internationale des Brevets (IPC):
***G01N 21/71*** *(2006.01)*

(52) Classification Coopérative des Brevets (CPC):
**G01N 21/718**

(54) **MÉTHODE DE CARTOGRAPHIE MULTI-ESPÈCES D'UNE ZONE À PARTIR DE DONNÉES SPECTRALES**

VERFAHREN ZUR MEHRSPEZIESABBILDUNG EINES BEREICHS AUS SPEKTRALDATEN

METHOD FOR MULTI-SPECIES MAPPING OF AN AREA FROM SPECTRAL DATA

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **18.10.2021 FR 2111043**

(43) Date de publication de la demande:
**19.04.2023 Bulletin 2023/16**

(73) Titulaire: **Commissariat à l'énergie atomique et aux énergies alternatives 75015 Paris (FR)**

(72) Inventeurs:
• **FINOTELLO, Riccardo**
  **91191 Gif-sur-Yvette Cedex (FR)**
• **TAMAAZOUSTI, Mohamed**
  **91191 Gif-sur-Yvette Cedex (FR)**
• **SIRVEN, Jean-Bpatise**
  **91191 Gif-sur-Yvette (FR)**

(74) Mandataire: **Atout PI Laplace Immeuble "Visium" 22, avenue Aristide Briand 94117 Arcueil Cedex (FR)**

(56) Documents cités:
• **MONCAYO S ET AL: "Exploration of megapixel hyperspectral LIBS images using principal component analysis", JOURNAL OF ANALYTICAL ATOMIC SPECTROMETRY, [Online] vol. 33, no. 2, 2018, pages 210-220, XP055929324, ISSN: 0267-9477, DOI: 10.1039/C7JA00398F Extrait de l'Internet: URL:https://pubs.rsc.org/en/content/articl epdf/2018/ja/c7ja00398f> [extrait le 2023-01-11]**
• **BROOK A: "Three-dimensional wavelets-based denoising of hyperspectral imagery", JOURNAL OF ELECTRONIC IMAGING, S P I E - INTERNATIONAL SOCIETY FOR OPTICAL ENGINEERING, US, vol. 24, no. 1, 2015, page 13034, XP060054700, ISSN: 1017-9909, DOI: 10.1117/1.JEI.24.1.013034 [extrait le 2015-02-24]**
• **SIRVEN J-B ET AL: "Qualitative and quantitative investigation of chromium-polluted soils by laser-induced breakdown spectroscopy combined with neural networks analysis", ANALYTICAL AND BIOANALYTICAL CHEMISTRY, SPRINGER BERLIN HEIDELBERG, BERLIN/HEIDELBERG, vol. 385, no. 2, 15 mars 2006 (2006-03-15) , pages 256-262, XP037836652, ISSN: 1618-2642, DOI: 10.1007/S00216-006-0322-8 [extrait le 2006-03-15]**

## Description

L'invention concerne le domaine de la cartographie multi-espèces d'une zone à partir de données spectrales qui peuvent être des données hyperspectrales ou multispectrales c'est-à-dire des données qui présentent une pluralité de valeurs dans différentes bandes spectrales pour un même point d'une zone d'une image ou d'une zone géographique. Une application possible de l'invention concerne l'imagerie chimique pour laquelle l'on cherche à cartographier la présence d'éléments chimiques à partir de données hyperspectrales par exemple acquises au moyen d'une technique de spectroscopie d'émission atomique de plasma induit par laser ou « Laser-induced breakdown spectroscopy » ou « LIBS » en anglais.

Le document "Exploration of megapixel hyperspectral LIBS images using principal component analysis", JOURNAL OF ANALYTICAL ATOMIC SPECTROMETRY, vol. 33, no. 2, 2018, MONCAYO S ET AL., concerne l'exploration d'images LIBS hyperspectrales à l'aide d'une analyse en composantes principales.

Le document "Three-dimensional wavelets-based denoising of hyperspectral imagery", JOURNAL OF ELECTRONIC IMAGING, vol. 24 (1), 2015, BROOK A, concerne le débruitage de l'imagerie hyperspectrale basé sur les ondelettes.

L'invention ne se limite pas à l'acquisition de données hyperspectrales par technologie LIBS mais plus généralement par tout type de technique de spectroscopie. L'invention s'applique aussi aux données hyperspectrales ou multispectrales acquises par imagerie satellite pour cartographier les espèces ou éléments présents dans une zone géographique tels que le type de végétation ou les éléments d'urbanisation. Plus généralement, l'invention s'applique pour tout type de données hyperspectrales ou multispectrales caractérisant une zone d'une image.

L'invention porte sur une nouvelle méthode de traitement de données pour réaliser une cartographie multi-espèces qui est particulièrement adaptée aux données hyperspectrales de grandes dimensions et/ou présentant un faible rapport signal à bruit et/ou présentant des interférences spectrales importantes et/ou avec un recouvrement spatial important entre les espèces ou éléments détectés.

De manière générale, la cartographie multi-espèces appliquée à des surfaces à une échelle microscopique permet d'étudier la morphologie, la structure et la composition chimique de matériaux hétérogènes.

La technologie LIBS permet de réaliser une analyse de matériau par ablation laser et spectroscopie. Les données acquises via cette technique sont des données spectrales qui correspondent, pour chaque point d'une zone, à un spectre d'émission comprenant des raies atomiques caractéristiques de la composition chimique élémentaire de l'échantillon.

Les données hyperspectrales LIBS sont obtenues en focalisant un faisceau laser en un point d'une surface à analyser. L'émission d'un plasma résultant de cette focalisation est collectée et traitée par spectroscopie pour obtenir un spectre de raies atomiques. Le processus est itéré pour chaque point de la zone à analyser.

La particularité de ces données hyperspectrales est que le nombre de canaux de longueurs d'onde est relativement élevé (de l'ordre de plusieurs milliers) et que le rapport signal à bruit est faible. Ce type de données est aussi caractérisé par la présence d'interférences spectrales, autrement dit, une superposition fréquente et difficile à résoudre des raies d'émission caractéristiques d'éléments ou espèces différents.

En effet, pour améliorer la résolution latérale de la cartographie, la taille du faisceau laser doit être réduite, ce qui entraine la réduction de la surface ablatée. De ce fait, le rapport signal à bruit d'un spectre obtenu pour une mesure en un point est intrinsèquement faible.

Par ailleurs, plus la taille du faisceau laser est petite, plus le nombre d'acquisitions doit être élevé pour imager une surface donnée. Le nombre de spectres enregistrés peut ainsi atteindre plusieurs milliers voire dizaines de milliers de points pour cartographier une zone donnée.

De ce fait, la caractérisation des compositions chimiques élémentaires en chaque point d'une zone du matériau peut être rendue complexe via des techniques de traitement de signal usuelles.

De manière générale, il existe un besoin pour une méthode de cartographie multi-espèces basée sur des données hyperspectrales fortement bruitées et à dimension élevée. La méthode doit permettre de caractériser une zone d'un matériau ou par exemple une zone géographique par la mesure, en chaque point de la zone, de différents contributeurs au signal : éléments chimiques dans le cas de la spectroscopie LIBS, formations géologiques, géographiques ou autres. Plus généralement, un problème à résoudre consiste à réaliser un partitionnement non supervisé de différents éléments ou espèces à partir de données hyperspectrales fortement bruitées et à dimension élevée.

Dans le domaine des techniques de spectroscopie LIBS, une première méthode connue pour réaliser une imagerie chimique d'un matériau est la méthode « line intensity map » décrite par exemple dans la référence [1].

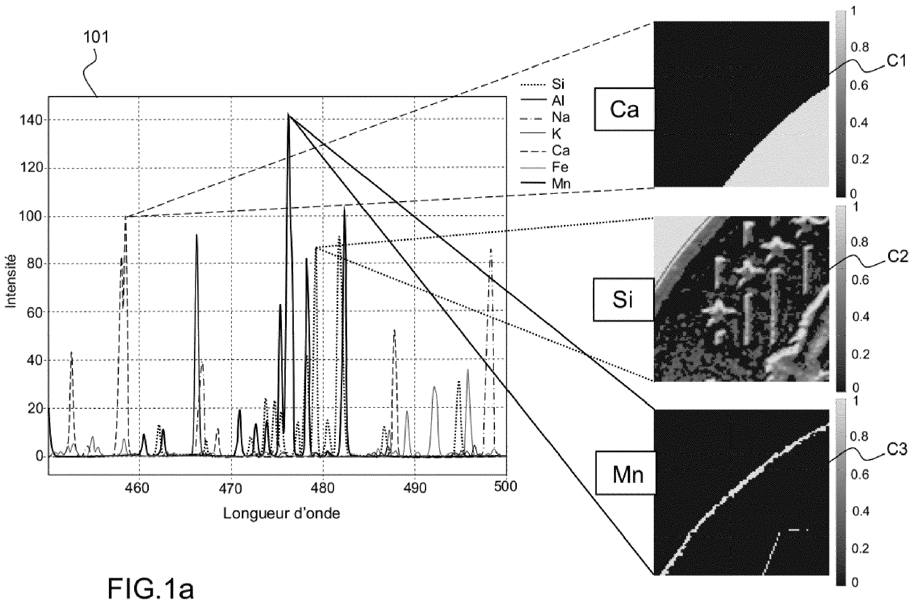

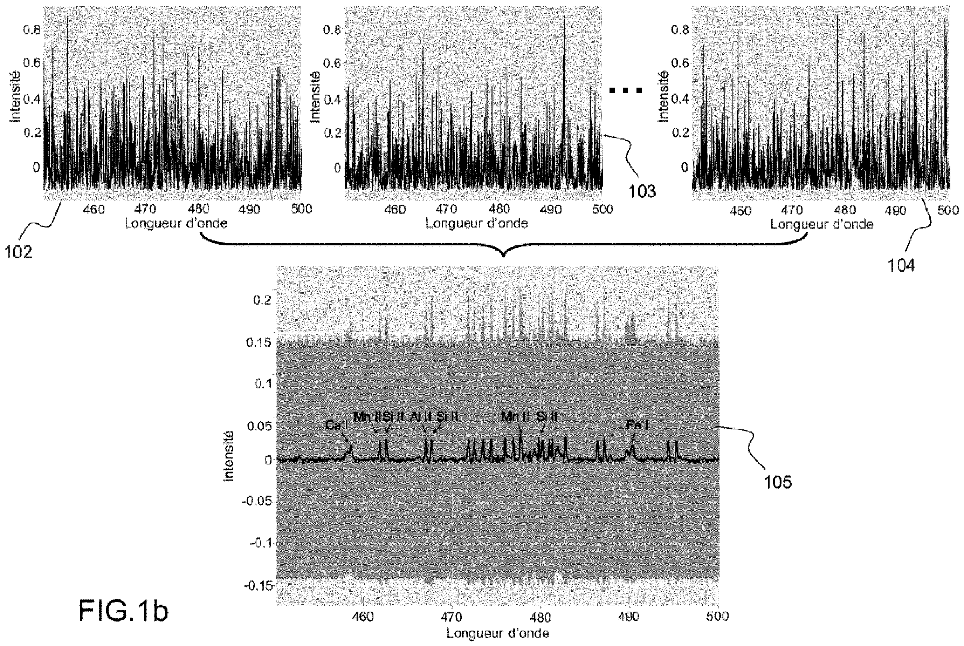

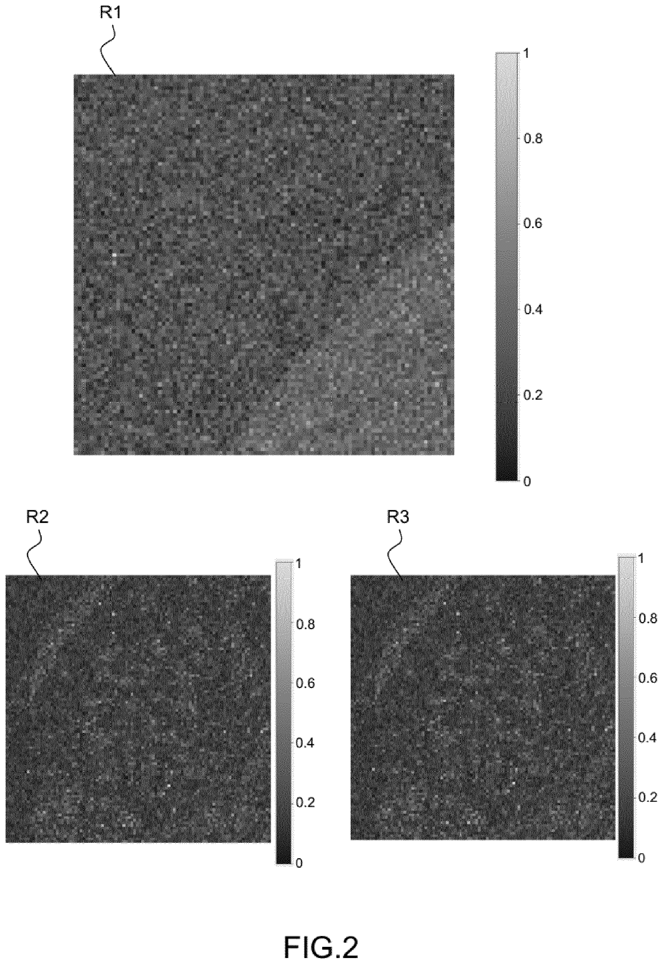

Les figures 1a, 1b et 2 illustrent le fonctionnement de cette méthode pour un exemple de composition chimique donné par les cartographies C1, C2, C3 qui représentent respectivement des cartes de référence de présence de Calcium (Ca), de Silicium (Si) et de Manganèse (Mn).

Le diagramme 101 de la figure 1a représente différentes signatures spectrales de référence d'éléments chimiques dont le Calcium, le Silicium et le Manganèse. Chaque signature spectrale est composée d'une ou plusieurs raies spectrales atomiques dans un ou plusieurs intervalles de longueurs d'onde.

L'acquisition par spectroscopie LIBS permet de générer, en chaque point de la zone à cartographier, un spectre 102, 103, 104 caractéristique de la composition chimique du matériau au point de la zone tel que représenté à la figure 1b. Les figures 102, 103, 104 représentent des exemples de spectres obtenus qui sont, comme on peut le voir, fortement bruités et ne permettent pas d'identifier les signatures spectrales caractéristiques des éléments chimiques à cartographier.

Pour pouvoir identifier ces signatures spectrales, la méthode « line intensity map » consiste à sommer l'ensemble des spectres acquis pour tous les points de la zone afin d'obtenir un spectre moyen 105 dans lequel des signatures spectrales d'éléments chimiques sont identifiables.

Dans un second temps, on réalise ensuite une cartographie de la zone imagée pour chaque élément chimique identifié par une raie d'émission sur le diagramme 105 parmi les raies d'émission qui sont situées dans des plages de longueurs d'onde associées à cet élément chimique. Pour cela, on sélectionne, sur chaque spectre 102, 103, 104, les intensités des raies dans les intervalles de longueur d'onde correspondant aux signatures spectrales des éléments chimiques identifiés.

La figure 2 représente les résultats de cartographie R1, R2, R3 obtenus respectivement pour les trois éléments chimiques Ca, Si, Mn. On voit que le niveau de bruit est très important et que cette technique ne permet pas de cartographier précisément les zones de présence de chaque élément chimique.

En effet, cette approche est basée sur seulement une petite fraction de l'information totale disponible et est très sensible aux interférences spectrales et aux effets de matrice.

Une seconde méthode connue consiste à appliquer aux données spectrales acquises une approche multivariée par exemple via une analyse en composantes principales. La référence [2] décrit un exemple d'application de cette méthode à des données acquises par spectroscopie LIBS.

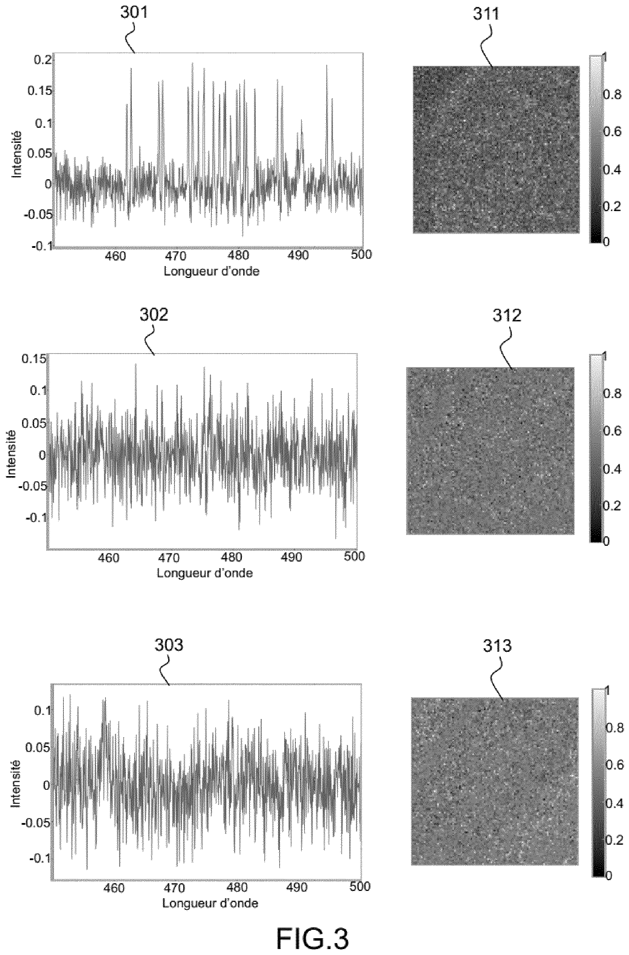

La figure 3 représente les signatures spectrales 301, 302, 303 des composantes principales obtenues ainsi que les cartographies 311, 312, 313 associées aux éléments correspondant à chaque composante principale.

On peut voir que cette méthode produit des résultats très fortement bruités et sensibles aux interférences qui ne sont pas exploitables pour cartographier précisément la présence des éléments chimiques recherchés.

En effet, l'interprétation physique des composantes principales obtenues est une tâche complexe en raison du fort niveau de bruit et car des contributions de différents éléments peuvent interférer au sein d'une même composante principale.

L'invention propose une nouvelle méthode de cartographie multi-espèces qui permet d'améliorer fortement les résultats obtenus pour des données hyperspectrales fortement bruitées et de dimension importante, par rapport aux méthodes de l'art antérieur précitées.

Pour cela, l'invention utilise une transformée discrète en Ondelettes couplée à un seuil de réduction du bruit afin de rendre les données hyperspectrales parcimonieuses pour améliorer les résultats obtenus par l'analyse en composantes principales.

L'invention a objet une méthode de cartographie multi-espèces d'une zone comprenant les étapes de :

- Acquérir un ensemble de données spectrales associant pour chaque point de la zone un spectre,

- Appliquer aux données spectrales une transformée en Ondelettes de manière à produire un ensemble de coefficients comprenant des coefficients de détail caractéristiques du bruit et des coefficients d'approximation caractéristiques du signal,

- Mettre à zéro les coefficients de détail dont la valeur de la densité spectrale d'énergie est inférieure à un seuil prédéterminé,

- Appliquer une transformée en Ondelettes inverse à l'ensemble de coefficients pour obtenir un nouvel ensemble de données spectrales parcimonieuses

- Appliquer une analyse en composantes principales au nouvel ensemble de données spectrales parcimonieuses de manière à :

    i. Déterminer une base de projection L dans le domaine spectral, chaque composante de la base de projection correspondant à une signature spectrale d'une espèce,

    ii. Projeter les données spectrales dans la base de projection L pour obtenir, pour chaque composante, une carte de la zone indiquant, pour chaque point de la zone, la proportion de l'espèce.

Selon un mode de réalisation particulier, l'étape d'analyse en composantes principales est réalisée à partir d'une matrice de covariance filtrée à l'aide d'une fonction noyau déterminée de manière à augmenter le rapport signal à bruit des données spectrales sur lesquelles est calculée la matrice de covariance.

Selon un mode de réalisation particulier, la fonction noyau est du type $f_\alpha(t) = t(1 - e^{-\alpha t^2})$, avec $\alpha$ un paramètre prédéterminé positif.

Selon un mode de réalisation particulier, la valeur du paramètre $\alpha$ dépend du rapport signal à bruit des données spectrales.

Selon un mode de réalisation particulier, la transformée en Ondelettes est une transformée en Ondelettes discrète, par exemple une transformée en Ondelettes bi-orthogonale.

Selon un mode de réalisation particulier, le seuil prédéterminé est compris entre 90% et 99% de la valeur maximale de la densité spectrale d'énergie des coefficients de détail.

Dans une variante de réalisation particulière, la méthode selon l'invention comprend en outre une étape d'association de chaque composante de la base de projection L à une espèce en fonction d'une comparaison avec une signature spectrale de l'espèce.

Selon un mode de réalisation particulier, les espèces sont des éléments chimiques ayant chacun une signature spectrale donnée.

Selon un mode de réalisation particulier, les données spectrales sont des données hyperspectrales.

L'invention a aussi pour objet un dispositif de cartographie multi- espèces comprenant un appareil d'acquisition d'un ensemble de données spectrales et une unité de calcul configurée pour exécuter les étapes de la méthode selon l'invention.

L'invention a aussi pour objet un programme d'ordinateur comprenant des instructions qui conduisent le dispositif selon l'invention à exécuter les étapes de la méthode selon l'invention.

L'invention a aussi pour objet un support lisible par ordinateur sur lequel est enregistré le programme d'ordinateur selon l'invention.

D'autres caractéristiques et avantages de la présente invention apparaîtront mieux à la lecture de la description qui suit en relation aux dessins annexés suivants.

[Fig. 1a] illustre, sur un premier ensemble de diagrammes, le fonctionnement d'une méthode d'imagerie chimique de type « line intensity map » selon l'art antérieur,

[Fig. 1b] illustre, sur un second ensemble de diagrammes, le fonctionnement d'une méthode d'imagerie chimique de type « line intensity map » selon l'art antérieur,

[Fig. 2] illustre un exemple de résultats obtenus avec la méthode décrite aux figures 1a et 1b,

[Fig. 3] illustre un exemple de résultats obtenus avec une méthode de l'art antérieur basée sur une analyse en composantes principales,

[Fig. 4] schématise, sur un organigramme, les étapes de mise en oeuvre de la méthode selon l'invention,

[Fig. 5] illustre un exemple de résultats obtenus avec la méthode selon l'invention.

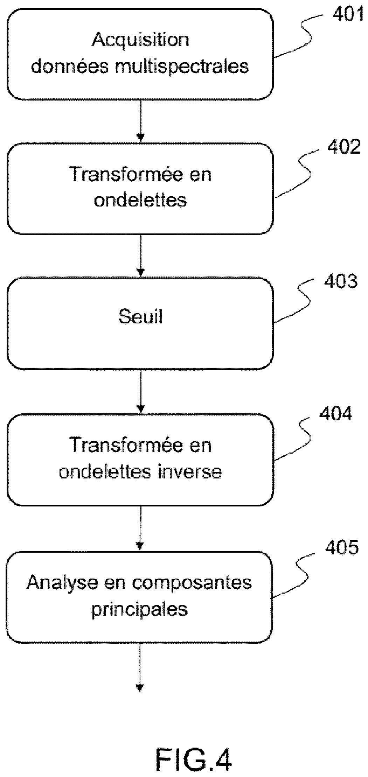

La figure 4 schématise les étapes de mise en oeuvre de la méthode de cartographie selon un mode de réalisation de l'invention.

La première étape 401 de la méthode consiste à acquérir des données spectrales au moyen d'un dispositif d'acquisition approprié selon l'application visée. Si l'application concerne une méthode de cartographie d'un matériau, les données sont des données hyperspectrales et sont par exemple acquises au moyen d'un dispositif de spectrométrie, par exemple de spectroscopie d'émission atomique de plasma induit par laser, ou un dispositif basé sur une technique de spectrométrie de masse couplée à une ablation laser ou à un faisceau d'ions ou à un faisceau de rayons X ou encore une technique de spectrométrie induite par une radiation d'un synchrotron ou par un faisceau de particules chargées ou encore une spectrométrie de type Raman ou de type IR. Si l'application concerne une méthode de cartographie d'une zone géographique, les données multi- ou hyperspectrales sont par exemple acquises au moyen d'un capteur d'imagerie multi- ou hyperspectrale embarqué dans une charge utile de satellite. L'invention s'applique plus généralement pour tout autre dispositif d'acquisition de données multi- ou hyperspectrales permettant de générer, pour chaque point ou pixel d'une zone, un spectre dans une plage de longueurs d'onde donnée.

Dans une variante de réalisation, les données acquises à l'étape 401 sont prétraitées afin d'estimer et de corriger un éventuel offset lié à l'acquisition, de normaliser les différents spectres mesurés afin qu'ils soient homogènes entre eux et de supprimer les zones aveugles si elles existent.

Les étapes 402, 403, 404 suivantes visent à transformer les données hyperspectrales dans une représentation parcimonieuse. Autrement dit, il s'agit de projeter les données dans une base de telle sorte que la projection obtenue présente un grand nombre de coefficients nuls ou proches de zéro. Le fait de générer une représentation parcimonieuse des données permet d'améliorer les résultats de l'analyse en composantes principales comme cela sera illustré par la suite.

Les étapes 402, 403, 404 consistent donc à appliquer une transformation ou une projection aux données hyperspectrales de manière à obtenir une représentation parcimonieuse de ces données.

Pour cela, à l'étape 402, on applique une transformée en Ondelettes aux données hyperspectrales de manière à obtenir un ensemble de coefficients. Préférentiellement, la transformée en Ondelettes choisie est une transformée discrète par exemple une transformée biorthogonale telle que décrite dans la référence [3]. Dans un autre mode de réalisation, la transformée en Ondelettes est une transformée continue.

La transformée en Ondelettes discrète consiste en un banc de deux filtres : un filtre passe haut produisant des coefficients dits de détail qui correspondent en moyenne au bruit et un filtre passe bas produisant des coefficients dits d'approximation qui correspondent en moyenne au signal utile.

A l'étape 403, on calcule la densité spectrale d'énergie des coefficients de détail et on compare le résultat à un seuil prédéterminé. Les coefficients de détail dont la densité spectrale d'énergie est inférieure au seuil sont mis à zéro. La densité spectrale d'énergie correspond aux coefficients de détail mis au carré. De cette manière, on limite l'influence du bruit ce qui permet de privilégier le signal qui est intrinsèquement parcimonieux puisque les signatures spectrales des espèces recherchées sont concentrées sur certaines plages de longueurs d'onde.

Le seuil est préférentiellement compris entre 90% et 99% de la valeur maximale de la densité spectrale d'énergie des coefficients de détail.

A l'étape 404, on applique la transformée inverse de celle appliquée à l'étape 402 afin de reconstruire les données hyperspectrales.

A l'étape 405, on applique une analyse en composantes principales aux données hyperspectrales.

L'analyse en composantes principales consiste, dans une première étape, à calculer la matrice de covariance C des données organisées sous la forme d'une matrice X dont une première dimension correspond à la dimension spatiale des données et une seconde dimension correspond à la dimension spectrale des données.

La matrice de covariance C est calculée à partir de la matrice des données spectrales X préalablement centrée, c'est-à-dire à laquelle le spectre moyen a été soustrait de chaque ligne de la matrice :

$$C = \frac{1}{N-1}(X - \bar{X})(X - \bar{X})^T$$

, où N est le nombre de spectres, correspondant au nombre de lignes, dans la matrice X.

On calcule ensuite d'une part la matrice diagonale des valeurs propres $\Lambda$ triées par ordre décroissant des valeurs et d'autre part les vecteurs propres de la matrice de covariance C regroupés dans une matrice W selon le même ordre que les valeurs propres.

Selon les principes connus de l'analyse en composantes principales, les données sont transformées en composantes principales au moyen d'une transformation L qui est une projection définie dans le domaine spectral.

Les coefficients de la transformation L sont obtenus à l'aide de la relation suivante :

$$L = \Lambda^{\frac{1}{2}} W^T$$

Les lignes de la matrice L représentent les axes d'une base de projection dans le domaine spectral. Chaque axe correspond à une signature spectrale d'une espèce ou d'un élément chimique recherché.

On calcule ensuite les composantes principales à l'aide de la relation suivante qui donne les données obtenues après projection des données initiales X sur la base de projection définie par la matrice L :

$$S = XW\Lambda^{-\frac{1}{2}}$$

La matrice S donne, pour chaque point de la zone à cartographier, une composante principale, c.à.d. la proportion des espèces dont la signature spectrale correspond aux coefficients de la transformée L. Chaque composante principale peut, ensuite, être ramenée sous la forme d'une cartographie en deux dimensions, ce qui donne la distribution spatiale de la composante.

Chaque ligne de la matrice L est associée à une cartographie déterminée à partir de la matrice S. Chaque ligne de la matrice L est homogène à une signature spectrale d'une ou plusieurs espèces chimiques. En comparant cette signature spectrale à une base de signatures prédéterminées (comme expliqué aux figures 1a et 1b), on peut identifier à quelle(s) espèce(s) chimique(s) correspond chaque composante principale. La cartographie associée donne ensuite la proportion de ces espèces chimiques pour chaque point de la zone.

Dans un mode de réalisation particulier de l'invention, on applique à la matrice de covariance C, un filtre sous la forme d'une fonction noyau qui a pour rôle de réduire les valeurs de la matrice de covariance qui sont très petites et qui sont le plus souvent liées au bruit de fond et de maintenir les valeurs les plus élevées qui sont liées au signal.

Un exemple de fonction noyau possible est la fonction $f_\alpha(t) = t(1 - e^{-\alpha t2})$ dont le comportement exponentiel permet de réduire les valeurs faibles de la matrice de covariance, en gardant les valeurs élevées inchangées.

Ce type de filtre a pour avantage d'améliorer le rapport signal à bruit pour des signaux parcimonieux.

Le paramètre $\alpha$ est un nombre strictement positif dont la valeur est choisie en fonction du rapport signal à bruit de la matrice de covariance. Si le rapport signal à bruit est faible, la valeur du paramètre $\alpha$ est choisie proche de 0, par exemple égale à $10^{-9}$, si le rapport signal à bruit est élevé, la valeur du paramètre $\alpha$ est choisie plus élevée, par exemple proche de 0,01.

Le paramètre $\alpha$ ainsi que la valeur du seuil à l'étape 403 peuvent être déterminés en tant qu'hyperparamètres au moyen d'un algorithme d'optimisation.

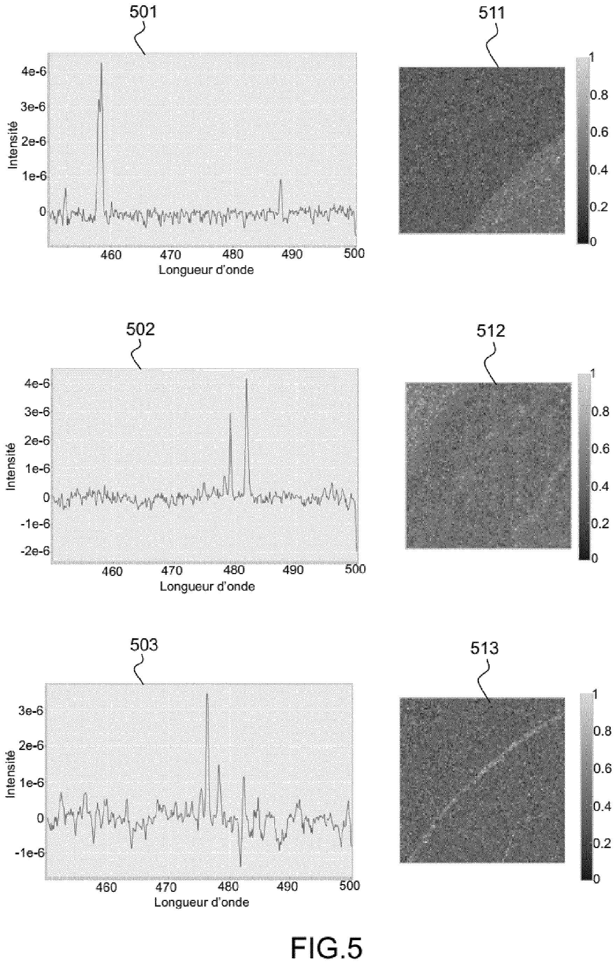

La combinaison de la transformation des données hyperspectrales en données parcimonieuses (au moyen des étapes 402,403,404) avec le filtrage de la matrice de covariance C au moyen d'une fonction noyau adaptée aux données parcimonieuses permet d'améliorer significativement les résultats de l'analyse par les méthodes de l'art antérieur comme cela est illustré à la figure 5.

La figure 5 représente, pour le même exemple de matériau qu'aux figures 2 et 3, les signatures spectrales 501, 502, 503 correspondant aux lignes de la matrice L obtenues via la méthode de la figure 4, ainsi que les cartographies 511, 512, 513 associées à chaque composante principale.

On peut remarquer sur les diagrammes 501, 502, 503 que les signatures spectrales obtenues permettent d'identifier beaucoup plus aisément les raies d'émission des éléments associés que les méthodes de l'art antérieur.

On peut remarquer sur les diagrammes 511, 512, 513 que les distributions spatiales correspondant aux éléments Ca, Si, Mn sont beaucoup plus visibles et identifiables que sur les résultats obtenus avec les méthodes de l'art antérieur.

Les étapes 402 à 405 de l'invention peuvent être mises en oeuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention combine les effets de l'utilisation d'un mécanisme de compression- décompression dans une base de décomposition en ondelettes avec une analyse en composantes principales.

Elle présente l'avantage d'être particulièrement adaptée aux données très bruitées et/ou de dimension importante et/ou présentant des interférences spectrales importantes et/ou avec un recouvrement spatial important entre les espèces détectées.

L'utilisation d'une décomposition en ondelettes a pour avantage de débruiter les hautes fréquences du signal mais aussi de permettre la reconstruction du signal contenu dans les données acquises sous une forme parcimonieuse.

Les étapes de compression, seuillage et décompression du signal au moyen d'une transformée en Ondelettes permettent de faire ressortir les signatures spectrales d'espèces sans connaissance a priori de la présence de ces espèces.

Ainsi, l'analyse en composantes principales appliquée à des données parcimonieuses permet de construire des composantes principales qui correspondent à des signatures spectrales d'espèces recherchées avec une probabilité améliorée par rapport à une méthode consistant à appliquer l'analyse en composantes principales aux données brutes.

L'utilisation d'un filtre particulier appliqué à la matrice de covariance des données permet de découpler le bruit de fond du signal lorsque celui-ci est dans une représentation parcimonieuse.

L'interprétation et la résolution des cartographies sont améliorées grâce à l'invention qui permet notamment de faire ressortir la présence de certaines espèces dont les signatures spectrales ne sont pas détectables au moyen des méthodes de l'art antérieur.

Références

[1] « Investigation of signal extraction in the frame of laser induced breakdown spectroscopy imaging, Spectrochimica Acta Part B: Atomic Spectroscopy 155 (2019), V. Motto-Ros et al. »

[2] "On the utilization of principal component analysis in laser-induced breakdown spectroscopy data analysis, a review, Spectrochimica Acta Part B: Atomic Spectroscopy 148 (2018), P. Porizka et al"

[3] "Sparse représentations for fault signatures via hybrid regularization in adaptive undecimated fractional spline wavelet transform domain, IOP Publishing, Measurement Science and Technology, 2021,Q Xiong et al"

**Revendications**

1. Méthode de cartographie multi-espèces d'une zone comprenant les étapes de :

   - Acquérir (401) un ensemble de données spectrales associant pour chaque point de la zone un spectre,
   - Appliquer (402) aux données spectrales une transformée en Ondelettes de manière à produire un ensemble de coefficients comprenant des coefficients de détail caractéristiques du bruit et des coefficients d'approximation caractéristiques du signal,
   - Mettre à zéro (403) les coefficients de détail dont la valeur de la densité spectrale d'énergie est inférieure à un seuil prédéterminé,

- Appliquer (404) une transformée en Ondelettes inverse à l'ensemble de coefficients pour obtenir un nouvel ensemble de données spectrales parcimonieuses

- Appliquer (405) une analyse en composantes principales au nouvel ensemble de données spectrales parcimonieuses de manière à :

    i. Déterminer une base de projection L dans le domaine spectral, chaque composante de la base de projection correspondant à une signature spectrale d'une espèce,

    ii. Projeter les données spectrales dans la base de projection L pour obtenir, pour chaque composante, une carte de la zone indiquant, pour chaque point de la zone, la proportion de l'espèce.

**2.** Méthode de cartographie multi-espèces selon la revendication 1 dans laquelle l'étape (405) d'analyse en composantes principales est réalisée à partir d'une matrice de covariance filtrée à l'aide d'une fonction noyau déterminée de manière à augmenter le rapport signal à bruit des données spectrales sur lesquelles est calculée la matrice de covariance.

**3.** Méthode de cartographie multi- espèces selon la revendication 2 dans laquelle la fonction noyau est du type $f_\alpha(t) = t(1 - e^{-\alpha t2})$, avec $\alpha$ un paramètre prédéterminé positif.

**4.** Méthode de cartographie multi- espèces selon la revendication 3 dans laquelle la valeur du paramètre $\alpha$ dépend du rapport signal à bruit des données spectrales.

**5.** Méthode de cartographie multi- espèces selon l'une quelconque des revendications précédentes dans laquelle la transformée en Ondelettes est une transformée en Ondelettes discrète, par exemple une transformée en Ondelettes bi-orthogonale.

**6.** Méthode de cartographie multi- espèces selon l'une quelconque des revendications précédentes dans laquelle le seuil prédéterminé est compris entre 90% et 99% de la valeur maximale de la densité spectrale d'énergie des coefficients de détail.

**7.** Méthode de cartographie multi- espèces selon l'une quelconque des revendications précédentes comprenant en outre une étape d'association de chaque composante de la base de projection L à une espèce en fonction d'une comparaison avec une signature spectrale de l'espèce.

**8.** Méthode de cartographie multi- espèces selon l'une quelconque des revendications précédentes dans laquelle les espèces sont des éléments chimiques ayant chacun une signature spectrale donnée.

**9.** Méthode de cartographie multi- espèces selon l'une quelconque des revendications précédentes dans laquelle les données spectrales sont des données hyperspectrales.

**10.** Dispositif de cartographie multi- espèces comprenant un appareil d'acquisition d'un ensemble de données spectrales et une unité de calcul configurée pour exécuter les étapes de la méthode selon l'une quelconque des revendications précédentes.

**11.** Programme d'ordinateur comprenant des instructions qui conduisent le dispositif selon la revendication 10 à exécuter les étapes de la méthode selon l'une quelconque des revendications 1 à 9.

**12.** Support lisible par ordinateur sur lequel est enregistré le programme d'ordinateur selon la revendication 11.

**Patentansprüche**

**1.** Verfahren zum Mehrspeziesabbilden einer Zone, das die folgenden Schritte umfasst:

    - Erfassen (401) eines Satzes von Spektraldaten, der für jeden Punkt der Zone ein Spektrum assoziiert,

    - Anwenden (402) einer Wavelet-Transformation auf die Spektraldaten, um einen Satz von Koeffizienten zu erzeugen, der für das Rauschen charakteristische Detailkoeffizienten und für das Signal charakteristische Näherungskoeffizienten umfasst,

    - Setzen (403) der Detailkoeffizienten, deren Wert der spektralen Energiedichte unter einem vorbestimmten Schwellenwert liegt, auf Null,

    - Anwenden (404) einer inversen Wavelet-Transformation auf den Satz von Koeffizienten, um einen neuen Satz von sparsamen Spektraldaten zu erhalten,

    - Anwenden (405) einer Hauptkomponentenanalyse auf den neuen sparsamen Spektraldatensatz zum:

        i. Bestimmen eine Projektionsbasis L im Spektralbereich, wobei jede Komponente der Projektionsbasis einer spektralen Signatur einer Spezies entspricht,

        ii. Projizieren der Spektraldaten in die Projektionsbasis L, um für jede Komponente eine Karte der Zone zu erhalten, die für jeden Punkt der Zone den Anteil der Spezies angibt.

**2.** Verfahren zum Mehrspeziesabbilden nach Anspruch 1, wobei der Schritt (405) der Hauptkomponentenanalyse auf der Basis einer Kovarianzmatrix durchgeführt wird, die mit Hilfe einer bestimmten Kernfunktion gefiltert wurde, so dass das Signal-Rausch-Verhältnis der Spektraldaten, auf den die Kovarianzmatrix berechnet wird, erhöht wird.

**3.** Verfahren zum Mehrspeziesabbilden nach Anspruch 2, wobei die Kernfunktion vom Typ $f_\alpha(t) = t(1 - e^{-\alpha t2})$ ist, wobei $\alpha$ ein vorbestimmter positiver Parameter ist.

**4.** Verfahren zum Mehrspeziesabbilden nach Anspruch 3, wobei der Wert des Parameters $\alpha$ vom Signal-Rausch-Verhältnis der Spektraldaten abhängt.

**5.** Verfahren zum Mehrspeziesabbilden nach einem der vorhergehenden Ansprüche, wobei die Wavelet-Transformation eine diskrete Wavelet-Transformation, z.B. eine biorthogonale Wavelet-Transformation ist.

**6.** Verfahren zum Mehrspeziesabbilden nach einem der vorhergehenden Ansprüche, wobei der vorbestimmte Schwellenwert zwischen 90% und 99% des Maximalwerts der spektralen Energiedichte der Detailkoeffizienten liegt.

**7.** Verfahren zum Mehrspeziesabbilden nach einem der vorhergehenden Ansprüche, das ferner einen Schritt des Assoziierens jeder Komponente der Projektionsbasis L mit einer Spezies auf der Basis eines Vergleichs mit einer spektralen Signatur der Spezies umfasst.

**8.** Verfahren zum Mehrspeziesabbilden nach einem der vorhergehenden Ansprüche, wobei die Spezies chemische Elemente sind, die jeweils eine bestimmte spektrale Signatur aufweisen.

**9.** Verfahren zum Mehrspeziesabbilden nach einem der vorhergehenden Ansprüche, wobei die Spektraldaten Hyperspektraldaten sind.

**10.** Vorrichtung zum Mehrspeziesabbilden, die ein Gerät zum Erfassen eines Satzes von Spektraldaten und eine Recheneinheit umfasst, die zum Ausführen der Schritte des Verfahrens nach einem der vorhergehenden Ansprüche konfiguriert ist.

**11.** Computerprogramm, das Befehle umfasst, die die Vorrichtung nach Anspruch 10 veranlassen, die Schritte des Verfahrens nach einem der Ansprüche 1 bis 9 auszuführen.

**12.** Computerlesbares Medium, auf dem das Computerprogramm nach Anspruch 11 gespeichert ist.

**Claims**

**1.** A method for multi-species mapping of a zone comprising the steps of:

> - acquiring (401) a set of spectral data associating a spectrum for each point of the zone,
> - applying (402) to the spectral data a wavelet transformation in order to produce a set of coefficients which comprise detail coefficients characteristic of the noise and approximation coefficients characteristic of the signal,
> - setting to zero (403) the detail coefficients whose spectral energy density value is less than a predetermined threshold,
> - applying (404) an inverse wavelet transformation to the set of coefficients in order to obtain a new set of parsimonious spectral data,
> - applying (405) an analysis of main components to the new set of parsimonious spectral data in order:
>
>> i. to determine a projection base L in the spectral range, each component of the projection base corresponding to a spectral signature of a species,
>> ii. to project the spectral data in the projection base L in order to obtain, for each component, a map of the zone indicating, for each point of the zone, the proportion of the species.

**2.** The multi-species mapping method according to claim 1, wherein the step (405) of analysis of main components is carried out based on a covariance matrix which is filtered using a predetermined core function in order to increase the signal-to-noise ratio of the spectral data on which the covariance matrix is calculated.

**3.** The multi-species mapping method according to claim 2, wherein the core function is of the type $f_\alpha(t) = t(1 - e^{-\alpha t2})$, with $\alpha$ being a predetermined positive parameter.

**4.** The multi-species mapping method according to claim 3, wherein the value of the parameter $\alpha$ depends on the signal-to-noise ratio of the spectral data.

**5.** The multi-species mapping method according to any one of the preceding claims, wherein the wavelet transformation is a discrete wavelet transformation, for example, a biorthogonal wavelet transformation.

6. The multi-species mapping method according to any one of the preceding claims, wherein the predetermined threshold is between 90% and 99% of the maximum value of the spectral energy density of the detail coefficients.

7. The multi-species mapping method according to any one of the preceding claims, further comprising a step of associating each component of the projection base L with a species in accordance with a comparison with a spectral signature of the species.

8. The multi-species mapping method according to any one of the preceding claims, wherein the species are chemical elements which each have a specific spectral signature.

9. The multi-species mapping method according to any one of the preceding claims, wherein the spectral data are hyperspectral data.

10. A multi-species mapping device comprising an apparatus for acquiring a set of spectral data and a calculation unit which is configured to carry out the steps of the method according to any one of the preceding claims.

11. A computer program which comprises instructions which lead the device according to claim 10 to carry out the steps of the method according to any one of claims 1 to 9.

12. A computer-readable medium on which the computer program according to claim 11 is stored.

FIG.1a

FIG.1b

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MONCAYO S.** Exploration of megapixel hyperspectral LIBS images using principal component analysis. *JOURNAL OF ANALYTICAL ATOMIC SPECTROMETRY,* 2018, vol. 33 (2
- **BROOK A.** Three-dimensional wavelets-based denoising of hyperspectral imagery. *JOURNAL OF ELECTRONIC IMAGING,* 2015, vol. 24 (1
- **V. MOTTO-ROS.** Investigation of signal extraction in the frame of laser induced breakdown spectroscopy imaging. *Spectrochimica Acta Part B: Atomic Spectroscopy,* 2019, vol. 155
- **P. PORIZKA.** On the utilization of principal component analysis in laser-induced breakdown spectroscopy data analysis, a review. *Spectrochimica Acta Part B: Atomic Spectroscopy,* 2018, vol. 148
- Sparse représentations for fault signatures via hybrid regularization in adaptive undecimated fractional spline wavelet transform domain. **Q XIONG.** Measurement Science and Technology. IOP Publishing, 2021